# EUROPÄISCHE PATENTANMELDUNG

(11) **EP 4 692 542 A1**
(43) Veröffentlichungstag der Anmeldung: **11.02.2026**
(21) Anmeldenummer: 25189478.8
(22) Anmeldetag: 15.07.2025
(51) Int. Cl.: F04B 43/00, F04B 43/02, F04B 45/04, F16J 3/02

(54) **VERBUNDMEMBRAN SOWIE VERFAHREN ZUR HERSTELLUNG**

(30) Priorität: 05.08.2024 DE 102024122239
(71) Anmelder: ULMAN Dichtungstechnik GmbH, 71116 Gärtringen (DE)
(72) Erfinder: Öhrle, Joachim, 71083 Herrenberg (DE); Xu, Jiajia, 70563 Stuttgart (DE); Shetty, Adithya Arun, 74172 Neckarsulm (DE); Radom, Leon, 74248 Ellhofen (DE)
(74) Vertreter: Andrejewski - Honke Patent- und Rechtsanwälte Partnerschaft mbB

(57) **Zusammenfassung**

Die Erfindung betrifft ein Verfahren einer Verbundmembran, insbesondere für Membranpumpen, mit einem Elastomerkörper (1), der einen Umfangsrand (2) mit einer Einspannfläche (3), einen Boden (4) und einen den Umfangsrand (2) mit dem Boden (4) verbindenden biegsamen Membranabschnitt (5) aufweist, wobei der Boden (4) eine Kammer (7) bildet, in der ein Einsatz (8) zumindest bereichsweise angeordnet ist und wobei der Einsatz (8) über eine zumindest abschnittsweise eine die Oberfläche bildende Verbundschicht mit dem Elastomerkörper (1) verbunden ist. Erfindungsgemäß ist die Verbundschicht (11) mit einer Vielzahl von hakenförmigen Ankerelementen (12) ausgebildet, wobei der Elastomerkörper (1) zumindest teilweise die Ankerelemente (12) hintergreift und wobei die Verbundschicht (11) eine Dicke von weniger als 100 µm aufweist.

## Beschreibung

Die vorliegende Erfindung betrifft eine Verbundmembran insbesondere für Membranpumpen mit einem Elastomerkörper, der einen Umfangsrand mit einer Einspannfläche, einen Boden und einen den Umfangsrand mit dem Boden verbindenden biegsamen Membranabschnitt aufweist, wobei der Boden eine Kammer bildet, in der ein Einsatz zumindest bereichsweise angeordnet ist und wobei der Einsatz über eine zumindest abschnittsweise eine die Oberfläche bildende Verbundschicht mit dem Elastomerkörper verbunden ist. Die untere und obere Wandung bilden entsprechend eine Kammer aus, die dazu vorgesehen ist, den Einsatz aufzunehmen.

Derartige Verbundmembranen sind üblicherweise kreisrund ausgebildet und weisen eine tellerförmige Grundform auf. Vor diesem Hintergrund werden sie auch als Tellerformmembran bezeichnet. Die Erfindung ist aber nicht auf solche Ausgestaltungen beschränkt sondern betrifft auch Rollmembrane, Sickenformmembrane, Kalottenformmembrane und Flachmembrane. Die entsprechende Verbundmembran kann in einer Membranpumpe randseitig eingespannt werden, während der Boden der Verbundmembran Hubbewegungen ausführt, wobei mit jeder Hubbewegung der biegsame Membranabschnitt umgestülpt wird, so dass in einem radialen Schnitt Abrollbewegungen des biegsamen Materials beobachtet werden können. Vor diesem Hintergrund wird der biegsame Membranabschnitt im Stand der Technik auch als Rollschlaufe bezeichnet.

Der in dem Boden angeordnete Einsatz ist im Gegensatz zu dem Elastomerkörper aus einem unflexiblen bzw. formbeständigen Material gebildet, so dass der Boden selbst nicht an der Rollbewegung teilnimmt sondern lediglich über eine an dem Einsatz befestigte Kolbenstange die Hubbewegungen auf den biegsamen Materialabschnitt überträgt. Hierzu ist der Einsatz zwischen der oberen und unteren Wandung angeordnet, wobei sich die obere Wandung auf eine im bestimmungsgemäßen Gebrauch dem zu fördernden Medium zugewandte Wandung handelt. Entsprechend betrifft die hintere Wandung im bestimmungsgemäßen Gebrauch eine dem Medium abgewandte Wandung.

Der Elastomerkörper weist üblicherweise eine medienseitige Auflage aus Polytetrafluorethylen (PTFE) auf, um hierdurch eine chemische Beständigkeit gegenüber den geförderten Medien zu gewährleisten.

Der Elastomerkörper ist aus einem elastomeren Material gebildet, wobei üblicherweise Kautschuk verwendet wird und wobei der Einsatz in dem Elastomerkörper zur Ausbildung eines stabilen Haftverbundes einvulkanisiert ist. Um diesen Herstellungsprozess zu vereinfachen, kommen vermehrt thermoplastische Elastomere (TPE) für den Elastomerkörper zum Einsatz. Hierbei handelt es sich um Polymere, die im Normalzustand elastomere Eigenschaften aufweisen. Durch Wärmezufuhr lassen sie sich jedoch plastisch verformen und somit in nahezu jede erwünschte Form bringen.

Eine solche Ausgestaltung lehrt beispielsweise die US 2011/0311379 A1, wobei dann der Elastomerkörper aus dem thermoplastischen Elastomer um eine Einlage herum gespritzt ist. Insbesondere bei der Einbindung von thermoplastischen Elastomeren ist es allerdings problematisch, dass diese Materialien mit dem üblicherweise aus Metall gebildeten Einsatz ohne zusätzliches chemisches Haftsystem keine ausreichende Bindung eingehen. Gerade bei größeren Membrandurchmessern führen die hohen Flächenkräfte und -belastungen dazu, dass sich der Elastomerkörper aus thermoplastischem Elastomer von dem Einsatz löst. Hierbei kann diese Problematik grundsätzlich auch bei anderen Kunststoffmaterialien auftreten, wobei dies jedoch besonders bei thermoplastischen Elastomeren besonders problematisch ist. Durch das Ablösen des Elastomerkörpers kann darüber hinaus auch Druckluft in den hierdurch entstehenden Spalt zwischen dem Einsatz und dem Elastomerkörper eintreten, wodurch der zuvor genannte Prozess noch weiter beschleunigt wird und beispielsweise zu einem Ausreißen des Einsatzes führen kann.

Gemäß der US 2011/0311379 A1 kann diese Problematik dadurch gelöst werden, dass der Elastomerkörper aus thermoplastischem Elastomer über eine zusätzliche Haftschicht an dem Einsatz befestigt wird. Darüber hinaus weist der Einsatz Durchbrüche auf, in die das flüssige Elastomer im Zuge der Herstellung eingespritzt wird, so dass insbesondere radiale Kräfte zu einem gewissen Maße ausgeglichen werden können. Diese Durchbrüche verhindern aber nicht, dass Druckluft in den Bereich zwischen dem Elastomerkörper und dem Einsatz eindringen kann bzw. können die Durchbrüche zumindest nicht wesentlich zu einer Verringerung der Luftmenge beitragen. Somit ist es ohne die zusätzliche Haftschicht nicht möglich, einen dauerhaften Verbund zwischen dem Elastomerkörper und dem Einsatz zu gewährleisten.

Die Einbindung einer solchen Haftschicht ist jedoch sowohl produktions- als auch kostenintensiv. Vor diesem Hintergrund lehrt die DE 10 2013 206 224 A1 eine Membran für eine Membranpumpe, bei der die Oberfläche durch Bearbeitung mit elektromagnetischer Strahlung aufgeraut wird, wodurch sich die Oberfläche vergrößert und sich in Folge dessen eine bessere Anhaftung des Elastomerkörper an dem Einsatz ergibt. Allerdings hat sich gezeigt, dass die Anhaftung noch immer verbesserungsbedürftig ist.

Die DE 10 2020 123 324 A1 beschreibt daher eine Verbundmembran, bei der der Einsatz zumindest teilweise aus einem offenporigen Material gebildet ist. Hierbei wird der Einsatz beispielsweise dadurch gebildet, dass zunächst ein Grundkörper aus einem Vollmaterial, z. B. Aluminium, in einer Gussform bereitgestellt wird und Gussbereiche zwischen der Gussform und dem Vollmaterial mit hitzebeständigen und wasserlöslichen Füllpartikeln ausgefüllt werden. Nach dem Guss können die Füllpartikel herausgewaschen werden und es bilden sich nach außen hin offene Poren, in die das Material des Elastomerkörpers eindringen kann.

Wenngleich sich dieses Verfahren grundsätzlich bewährt hat, so hat sich in der Praxis gezeigt, dass die Herstellung derartiger Verbundmembrane vergleichsweise aufwendig und daher gegenüber den bislang bekannten Verbundmembranen nicht kosteneffizient ist.

Vor diesem Hintergrund liegt der Erfindung die Aufgabe zu Grunde, eine Verbundmembran anzugeben, welche sich einerseits durch eine hochwirksame Verbindung des Elastomerkörpers mit dem Einsatz auszeichnet und zugleich kosteneffizient hergestellt werden kann.

Gegenstand und Lösung dieser Aufgabe ist eine Verbundmembran gemäß Anspruch 1 und ein Verfahren zur Herstellung einer Verbundmembran gemäß Anspruch 13.

Demnach ist erfindungsgemäß vorgesehen, dass die Verbundschicht mit einer Vielzahl von hakenförmigen Ankerelementen ausgebildet ist, wobei der Elastomerkörper zumindest teilweise die Ankerelemente hintergreift und wobei die Verbundschicht eine Dicke von weniger als 100 µm aufweist. In diesem Zusammenhang wird unter der Verbundschicht ein Bereich des Einsatzes verstanden, welcher sich ausgehend von der Oberfläche nach innen hin erstreckt und wobei sämtliche Ankerelemente innerhalb dieser Verbundschicht angeordnet sind. Die Dicke der Verbundschicht erstreckt sich hierbei im Wesentlichen soweit ausgehend von der Oberfläche, bis alle Ankerelemente hiervon umfasst sind.

Entsprechend wird eine Verbundmembran geschaffen, welche in einem vergleichsweise dünnen Bereich des Einsatzes mikroskopische Ankerelemente aufweist, welche aufgrund ihrer Vielzahl dazu geeignet sind, den Elastomerkörper an dem Einsatz zu halten. Hierbei ist es wesentlich, dass auch bei einer dynamischen Belastung weiterhin ein stabiler Verbund zwischen dem Einsatz und dem Elastomerkörper geschaffen wird. Zugleich können die mikroskopischen Ankerelemente durch eine Oberflächenbearbeitung bzw. eine Oberflächenstrukturierung des Einsatzes geschaffen werden, sodass der Einsatz nicht durch konstruktive Ausbildung makroskopischer Ankerelemente gebildet werden muss. Hierdurch lässt sich das Herstellungsverfahren besonders schnell und kosteneffizient durchführen. Selbstverständlich ist es im Rahmen der Erfindung aber auch möglich, zusätzliche konstruktive Maßnahmen vorzusehen, um ein Ablösen des Elastomerkörpers zu verhindern. Beispielsweise können Bohrungen parallel zur Mittelachse in dem Einsatz vorgesehen sein, in die das Material des Elastomerkörpers eingreift bzw. sich durch diese hindurcherstreckt.

Gemäß einer besonders bevorzugten Weiterbildung der Erfindung weist die Verbundschicht eine Dicke von weniger als 70 µm, insbesondere weniger als 50 µm, auf. Besonders bevorzugt ist ferner eine Ausgestaltung, bei der die Verbundschicht eine Dicke zwischen 0,5 und 100 µm, insbesondere zwischen 10 und 50 µm, aufweist.

Es versteht sich hierbei, dass die Verbundschicht nicht die gesamte Oberfläche des Einsatzes bilden muss. Vielmehr kann eine entsprechende Verbundschicht lediglich abschnittsweise die Oberfläche des Einsatzes bilden, wobei dann die Verbundschicht insbesondere dort angeordnet ist, wo die größten Belastungen während des Einsatzes der Verbundmembran zwischen dem Elastomerkörper und dem Einsatz wirken.

Wie bereits zuvor erläutert handelt es sich bei den Ankerelementen um mikroskopische Ankerelemente. Diese weisen bevorzugt zumindest teilweise, bevorzugt jedoch alle, eine größte Erstreckung zwischen 0,2 und 30 µm, insbesondere zwischen 0,5 und 10 µm, auf. Unter der größten Erstreckung wird hierbei die Strecke der Ankerelemente verstanden, welche sich unabhängig von ihrer Ausrichtung frei von anderen Ankerelementen erstrecken. Üblicherweise handelte es sich hierbei um eine Erstreckung in Dickenrichtung bzw. um eine Erstreckung, welche im Wesentlichen senkrecht zur Oberfläche angeordnet ist. Darüber hinaus weist die Oberflächenschicht bevorzugt eine Ankerelementdichte zwischen 500 und 100 000 Ankerelemente/mm². insbesondere zwischen 5 000 und 50 000 Ankerelemente/mm², auf.

Gemäß einer bevorzugten Weiterbildung der Erfindung ist die Verbundschicht durch ein Ätzverfahren, insbesondere ein nass-chemisches Ätzverfahren, gebildet. Somit handelt es sich folglich um eine Bearbeitung der Oberfläche, bei der die Oberflächeneigenschaften gezielt verändert werden. Besonders bevorzugt ist hierbei ein Ätzverfahren, welches auch unter der Bezeichnung "Nanoscale-Sculpturing" bekannt ist. Ein solches Ätzverfahren wird beispielsweise in der DE 10 2016 102 379 B3 beschrieben. Hierbei wird die Oberfläche des Einsatzes in einem chemischen Ätzbad behandelt. Hierdurch erfolgt eine Strukturierung der Oberfläche durch den Ätzeingriff mit einer Ätzlösung. Die Art der Ätzlösung ergibt sich anhand des Materials des zu bearbeitenden Einsatzes, wobei üblicherweise eine wässrige Ätzlösung mit einem Gewichtsanteil von 7,25 % Salzsäure (HCL) verwendet wird. Das Ätzen erfolgt bei Raumtemperatur und ohne verrühren der Flüssigkeit. Durch ein solches Verfahren lösen sich insbesondere die besonders leicht löslichen Bestandteile der Oberfläche, sodass der Einsatz bzw. die Oberfläche nicht in struktureller Hinsicht beschädigt wird. Vielmehr bilden sich durch das Herauslösen einzelner Bestandteile entsprechende Ankerelemente, welche dann für die besonders gute Haftwirkung zwischen dem Elastomerkörper und dem Einsatz verantwortlich sind.

Besonders bevorzugt sind in diesem Zusammenhang Ankerelemente, welche zumindest teilweise aus quaderförmigen Abschnitten gebildet sind. Eine solche Ausgestaltung lässt sich insbesondere dann in besonders vorteilhafter Art und Weise erzielen, wenn der Einsatz zumindest teilweise aus Aluminium gebildet ist. Die quaderförmigen Abschnitte weisen hierbei eine im Wesentlichen rechtwinklige Ausgestaltung auf. Die Größe dieser Abschnitte beträgt in der Regel zwischen 20 nm bis 50 µm.

Besonders bevorzugt ist es in diesem Fall, wenn die Ankerelemente zumindest teilweise aus einer Vielzahl zueinander verschachtelt angeordneter quaderförmige Abschnitte gebildet sind. Entsprechend lassen sich die Ankerelemente bzw. die Hakenform durch die Anordnung der quaderförmigen Abschnitte erzielen, wobei dann entsprechend einzelner quaderförmige Abschnitte versetzt bzw. verschachtelt zueinander angeordnet sind. Üblicherweise weisen dann die Ankerelemente eine sich nach oben hin verjüngende Form auf. Eine solche Ausgestaltung lässt sich mit einer reinen Oberflächenätzung ohne Umstrukturierung nicht erzielen.

Bevorzugt ist der Einsatz in der Verbundschicht und zumindest in an die Verbundschicht angrenzenden Abschnitten aus einem identischen Material ausgebildet. Hierdurch wird deutlich, dass es sich bei der Verbundschicht nicht um eine ergänzend aufgetragene Beschichtung handelt, sondern dass die Verbundschicht vielmehr in einem integralen Oberflächenabschnitt des Einsatzes gebildet ist.

Gemäß einer bevorzugten Weiterbildung der Erfindung weist der Einsatz zumindest in den an die Verbundschicht angrenzende Abschnitten eine Dichte zwischen 2,5 und 8,8 g/cm³ auf. Hierbei wird sich nicht auf das Material sondern auf die Abschnitte des Einsatzes bezogen, wobei deutlich wird, dass bevorzugt die an die Verbundschicht angrenzenden Abschnitte aus einem Vollmaterial gebildet sind. Insbesondere sind alle Bereiche außerhalb der Verbundschicht des Einsatzes mit einer entsprechenden Dichte bzw. aus einem Vollmaterial gebildet.

Besonders bevorzugt ist der Einsatz zumindest teilweise, insbesondere jedoch vollständig, aus Aluminium, Messing oder Stahl, insbesondere aus Edelstahl, gebildet. Im Falle von Aluminium weisen die an die Verbundschicht angrenzenden Abschnitte eine Dichte zwischen 2,5 und 3 g/cm³, im Fall von Messing zwischen 8 und 9 g/cm³ und im Fall von Stahl zwischen 7,5 und 8,2 g/cm³ auf.

Eine Weiterbildung der Erfindung sieht ferner vor, dass der Elastomerkörper eine die Kammer bildende obere und eine untere Wandung aufweist und dass die Verbundschicht zumindest an die untere Wandung anschließt. Durch eine solche Ausgestaltung wird verhindert, dass die aufgrund der Hubbewegung hervorgerufenen radialen Kräfte eine Ablösung zwischen der unteren Wandlung und dem Einsatz verhindern. Zugleich werden durch das Eindringen des Materials des Elastomerkörpers in die Verbundschicht die Hohlräume des Verbundabschnittes wirksam versperrt, sodass der Eintritt von Druckluft sowohl durch die Hohlräume als auch durch etwaig gebildete Kanäle zwischen der unteren Wandung und dem Verbundabschnitt wirksam verringert oder sogar vollständig verhindert werden. Durch den Eintritt von Druckluft erhöht sich die Gefahr eines Ablösens des Elastomerkörpers von dem Einsatz, wodurch die Betriebszeit der Verbundmembran wesentlich verlängert wird.

Gemäß einer Weiterbildung der Erfindung kann der Verbundabschnitt auch an beide Wandungen anschließen. Dementsprechend ist dann der Einsatz zumindest an den an die Wandungen angrenzenden Bereichen mit einem entsprechenden Verbundabschnitt ausgebildet. Gemäß einer solchen Ausgestaltung kann das Material des Elastomerkörpers sowohl an der oberen als auch an der unteren Wandungen in den Verbundabschnitt eingreifen. Somit bildet sich auch zwischen der oberen Wandung und dem Einsatz eine Verbundhaftung aus, die insbesondere die auf die Verbundmembran wirkende Oberflächenkräfte aufnimmt, welche im Zuge der Hubbewegung durch einen zeitlich begrenzten Unterdruck entstehen. Somit wird bei einer solchen Ausgestaltung ein Ablösen des Elastomerkörpers sowohl infolge der in axialer Richtung wirkenden Oberflächenkräfte als auch infolge der radialen Kräfte wirksam verhindert. In diesem Zusammenhang meint eine axiale Richtung eine Richtung parallel zur Mittelachse der Verbundmembran.

Eine bevorzugte Weiterbildung der Erfindung sieht vor, dass der Elastomerkörper zumindest eine an den Einsatz anschließende Grundschicht aus einem thermoplastischen Elastomer (TPE) aufweist. Hierbei kann es sich insbesondere um ein thermoplastisches Polyurethan (TPU), ein vernetztes thermoplastisches Elastomer (TPV) oder um ein thermoplastisches Polyesterelastomer (TPC) handeln.

Grundsätzlich sind aber auch weitere Arten von thermoplastischen Polymeren geeignet. Alternativ kann der Elastomerkörper auch aus Acrylnitril-Butadien-Kautschuk (NBR), Ethylen-Propylen-Dien-Kautschuk (EPDM), ChloroprenKautschuk (CR), Styrol-Butadien-Kautschuk (SBR), einer Fluorkautschuk-Mischung (FKM) oder aus Silikon-Kautschuk (VMQ) gebildet sein.

Darüber hinaus kann der Elastomerkörper auch eine Auflagefolie aufweisen, welche üblicherweise auf einer Vorderseite des Elastomerkörpers angeordnet ist und welche entsprechend in Kontakt mit dem zu fördernden Medium steht. Gerade im Falle von chemisch aggressiven Medien kann es sinnvoll sein, im Sinne einer möglichst langen Betriebszeit eine Auflagefolie aus einem chemisch beständigen Material bereitzustellen. Dieses Material kann beispielsweise aus PTFE oder aus einem ultrahochmolekularen Polyethylen bestehen.

Gemäß einer bevorzugten Ausgestaltung der Erfindung weist der Einsatz ferner eine Anschlusseinrichtung für eine Kolbenstange auf, wobei diese Kolbenstange grundsätzliche über eine Schraubverbindung, einen Presssitz oder einen Formschluss an dem Einsatz befestigt werden kann. Besonders bevorzugt ist in diesem Zusammenhang eine Schraubverbindung, da die Kolbenstange so in einfacher Art und Weise lösbar mit der Verbundmembran verbunden werden kann. Gemäß einer solchen Ausgestaltung weist der Einsatz ein Innengewinde auf, welcher entsprechend mit einem Außengewinde auf der Kolbenstange zusammenwirken kann. Dieses Innengewinde kann unmittelbar in dem Einsatz bzw. in dem Material des Einsatzes gebildet sein. Alternativ kann aber auch eine Gewindehülse in dem Einsatz angeordnet werden, wobei dann das Innengewinde in der Gewindehülse vorgesehen ist. Die Gewindehülse ist wiederum mit dem Einsatz verbunden, wobei dies über einen Presssitz oder auch über Formschluss möglich ist.

Darüber hinaus lehrt die vorliegende Erfindung auch eine Membranpumpe mit einer erfindungsgemäßen Verbundmembran.

Ferner ist auch ein Verfahren zur Herstellung einer Verbundmembran gemäß Patentanspruch 13 Gegenstand der vorliegenden Erfindung. Dieses Verfahren ist insbesondere dazu vorgesehen, um eine erfindungsgemäße Verbundmembran herzustellen, wobei zunächst ein Einsatz bereitgestellt wird, welcher zumindest abschnittsweise eine die Oberfläche bildende Verbundschicht aufweist, welche mit einer Vielzahl von hakenförmigen Ankerelementen ausgebildet ist und wobei die Verbundschicht eine Dicke von weniger als 100 µm aufweist. Anschließend wird der Einsatz zur Ausbildung des Elastomerkörpers mit einem schmelzflüssigen Elastomer umgossen.

Eine bevorzugte Weiterbildung des Verfahrens sieht vor, dass der Einsatz vor der Bereitstellung auf der Oberfläche zumindest teilweise mit einem Ärzverfahren, insbesondere mit einem nass-chemischen Ätzverfahren, behandelt wird, wobei sich im Zuge der Behandlung die Verbundschicht mit einer Vielzahl von Ankerelementen ausbildet. Insbesondere kommt hier das bereits zuvor im Zusammenhang mit der Verbundmembran erwähnte Nanoscale-Sculpturing zum Einsatz.

Im Folgenden wird die Erfindung anhand von Zeichnungen erläutert. Es zeigen:
- Fig. 1: eine erfindungsgemäße Verbundmembran in einer Schnittdarstellung,
- Fig. 2: eine makroskopische Detailansichten an der Grenzfläche zwischen dem Elastomerkörper und dem Einsatz,
- Fig. 3: eine alternative Ausgestaltung des Einsatzes.

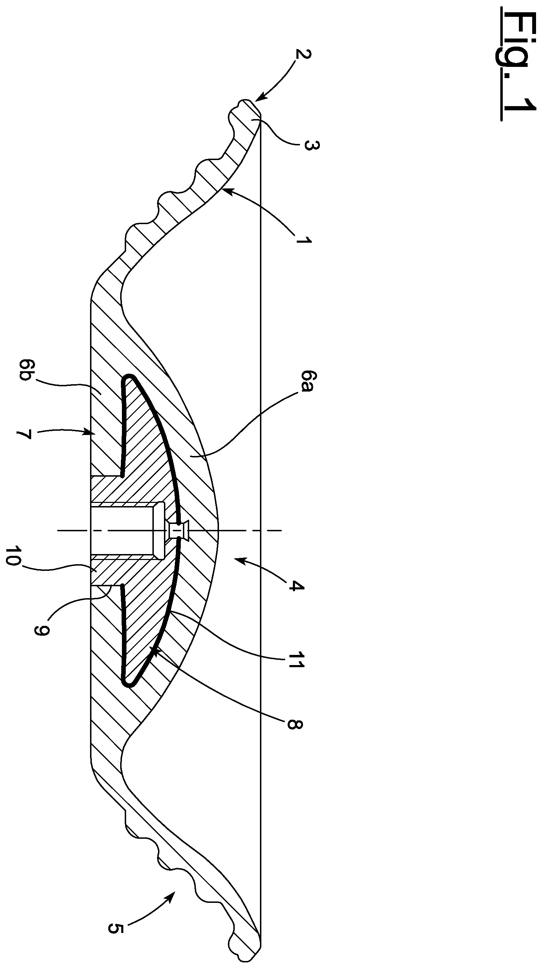

Die Fig. 1 zeigt eine erfindungsgemäße Verbundmembran in einer Schnittdarstellung. Die Verbundmembran weist einen Elastomerkörper 1 aus einem thermoplastischen Elastomer mit einem Umfangsrand 2, einer Einspannfläche 3, einem Boden 4 und ein den Umfangsrand 2 mit dem Boden 4 verbindenden biegsamen Materialabschnitt 5 auf. Der Boden 4 ist aus einer oberen und einer unteren Wandung 6a, 6b gebildet, wobei die Wandungen 6a, 6b eine Kammer 7 ausbilden, in der ein Einsatz 8 zumindest bereichsweise angeordnet ist.

Der Einsatz 8 erstreckt sich durch eine Öffnung 9 in der unteren Wandlung 6b hindurch und bildet an einem unteren Ende eine mit der unteren Warnung 6b fluchtende Anordnung.

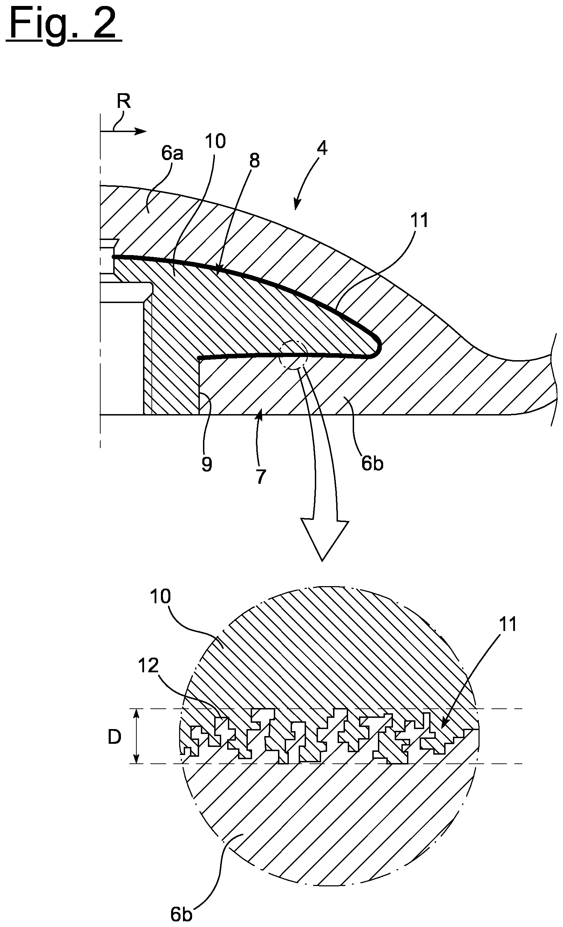

Der Einsatz 8 weist darüber hinaus eine zumindest abschnittsweise eine die Oberfläche bildende Verbundschicht 11 auf, wobei in dem gezeigten Beispiel die Verbundschicht 11 den Einsatz 8 nahezu vollständig umschließt. Die Verbundschicht 11 unterscheidet sich gegenüber daran angrenzenden Abschnitten 10 dahingehend, dass der Einsatz 8 im Wesentlichen aus einem Vollmaterial gebildet ist, während die Verbundschicht 11 dazu ausgebildet ist, eine Verbindung zwischen dem Elastomerkörper 1 und dem Einsatz 8 zu bewirken. Dies erfolgt dadurch, dass die Oberfläche des Einsatzes zur Ausbildung der Verbundschicht 11 mit einem Ätzverfahren bearbeitet wurde. Insbesondere handelt es sich hierbei um ein nass-chemisches Ätzverfahren, durch welches eine Umbildung der Oberfläche des Einsatzes 8 erfolgt. Dies geht insbesondere aus der Fig. 2 deutlicher hervor.

Insbesondere anhand der Detailansicht ist erkennbar, dass die Verbundschicht 11 eine Vielzahl hakenförmiger Ankerelemente 12 aufweist, welche wiederum jeweils aus einer Vielzahl quaderförmige Abschnitte gebildet sind, wobei die quaderförmigen Abschnitte zueinander verschachtelt angeordnet sind, sodass sich eine hakenförmige Ausgestaltung der Ankerelemente 12 ergibt. Die Ankerelemente 12. werden dann von dem Material des Elastomerkörpers 1 hintergriffen, wodurch das thermoplastische Elastomer des Elastomerkörpers 1 und die Verbundschicht 11 des Einsatzes 8 eine mechanisch feste Verbindung ausbilden, welche insbesondere den dynamischen Belastungen der Verbundmembran im Einsatz standhält.

Die Verbundschicht 11 weist hierbei eine Dicke D von weniger als 100 µm, insbesondere weniger als 70 µm, besonders bevorzugt weniger als 50 µm, auf. Bevorzug ist hierbei vorgesehen, dass die Dicke D zwischen 0,5 und 100 µm beträgt.

Die Verbundschicht 11 ist hierbei so bemessen, dass sämtliche Ankerelemente 12 innerhalb dieser Verbundschicht 11 angeordnet sind. Die Ankerelemente weisen hierbei eine größte Erstreckung zwischen 0,2 und 30 µm auf. Hierbei ist die größte Erstreckung der Ankerelemente 12 üblicherweise in Dickenrichtung. Die Ankerelemente 12 weisen darüber hinaus üblicherweise eine sich in Dickenrichtung verjüngende Form auf.

Der Einsatz 8 kann üblicherweise aus Aluminium, Messing oder Stahl, insbesondere Edelstahl, gebildet sein, wobei die Ausbildung der Verbundschicht 11 ausschließlich auf einer Umbildung der Oberfläche des Einsatzes 8 erfolgt.

Der Fig. 2 kann darüber hinaus entnommen werden, dass der Einsatz 8 sowohl auf einer der unteren Wandung 6b zugewandten Seite als auch auf einer der oberen Wandung 6a zugewandten Seite eine Verbundschicht 11 aufweisen, sodass entsprechende der Elastomerkörper 1 über beide Wandlungen 6a, 6b an dem Einsatz 8 befestigt ist.

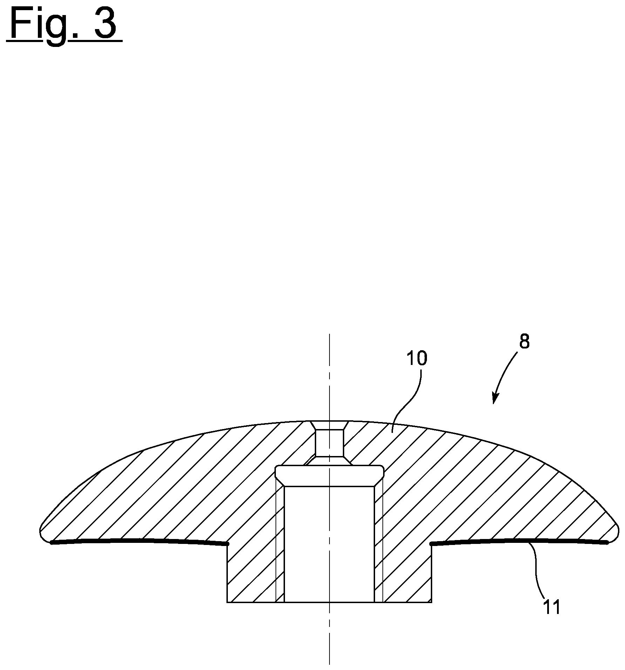

Die Fig. 3 zeigt in diesem Zusammenhang eine Ausgestaltung, bei der lediglich auf einer unteren Seite des Einsatzes 8 eine Verbundschicht 11 vorgesehen ist, sodass entsprechend der Einsatz 8 ausschließlich über die untere Wandung 6b an dem Elastomerkörper 1 befestigt werden kann.

## Patentansprüche

1. Verbundmembran, insbesondere für Membranpumpen, mit einem Elastomerkörper (1), der einen Umfangsrand (2) mit einer Einspannfläche (3), einen Boden (4) und einen den Umfangsrand (2) mit dem Boden (4) verbindenden biegsamen Membranabschnitt (5) aufweist, wobei der Boden (4) eine Kammer (7) bildet, in der ein Einsatz (8) zumindest bereichsweise angeordnet ist und wobei der Einsatz (8) über eine zumindest abschnittsweise eine die Oberfläche bildende Verbundschicht mit dem Elastomerkörper (1) verbunden ist,
**dadurch gekennzeichnet, dass**
die Verbundschicht (11) mit einer Vielzahl von hakenförmigen Ankerelementen (12) ausgebildet ist, wobei der Elastomerkörper (1) zumindest teilweise die Ankerelemente (12) hintergreift und wobei die Verbundschicht (11) eine Dicke (D) von weniger als 100 µm aufweist.

2. Verbundmembran nach Anspruch 1, **dadurch gekennzeichnet, dass** die Verbundschicht (11) eine Dicke (D) zwischen 0,5 und 100 µm, insbesondere zwischen 10 und 50 µm, aufweist.

3. Verbundmembran nach Anspruch 1 oder 2, **dadurch gekennzeichnet, dass** die Ankerelemente (12) zumindest teilweise eine größte Erstreckung zwischen 0,2 und 30 µm, insbesondere zwischen 0,5 und 10 µm, aufweisen.

4. Verbundmembran nach einem der Ansprüche 1 bis 3, **dadurch gekennzeichnet, dass** die Verbundschicht (11) durch ein Ätzverfahren, insbesondere ein nass-chemisches Ätzverfahren, gebildet ist.

5. Verbundmembran nach einem der Ansprüche 1 bis 4, **dadurch gekennzeichnet, dass** die Ankerelemente (12) zumindest teilweise aus quaderförmigen Abschnitten gebildet sind.

6. Verbundmembran nach Anspruch 5, **dadurch gekennzeichnet, dass** die Ankerelemente (12) zumindest teilweise aus einer Vielzahl zueinander verschachtelt angeordneter quaderförmiger Abschnitte gebildet sind.

7. Verbundmembran nach einem der Ansprüche 1 bis 6, **dadurch gekennzeichnet, dass** der Einsatz (8) in der Verbundschicht (11) und zumindest in an die Verbundschicht (11) angrenzenden Abschnitten aus einem identischen Material ausgebildet ist.

8. Verbundmembran nach Anspruch 7, **dadurch gekennzeichnet, dass** der Einsatz (8) zumindest in den an die Verbundschicht (11) angrenzenden Abschnitten eine Dichte zwischen 2,5 und 8,8 g/cm³ aufweist.

9. Verbundmembran nach einem der Ansprüche 1 bis 8, **dadurch gekennzeichnet, dass** der Einsatz (8) aus Aluminium, Messing oder Stahl, insbesondere Edelstahl, gebildet ist.

10. Verbundmembran nach einem der Ansprüche 1 bis 9, **dadurch gekennzeichnet, dass** der Elastomerkörper (1) eine die Kammer (7) bildende obere und eine untere Wandung (6a, 6b) aufweist und die Verbundschicht (11) zumindest an die untere Wandung (6a) anschließt.

11. Verbundmembran nach Anspruch 4, **dadurch gekennzeichnet, dass** die Verbundschicht (11) an beide Wandungen (6a, 6b) anschließt.

12. Verbundmembran nach einem der Ansprüche 1 bis 11, **dadurch gekennzeichnet, dass** der Elastomerkörper (1) zumindest eine an den Einsatz (8) anschließende Grundschicht aus einem thermoplastischen Elastomer (TPE) aufweist.

13. Verfahren zur Herstellung einer Verbundmembran, insbesondere nach einem der Ansprüche 1 bis 12, **dadurch gekennzeichnet, dass** ein Einsatz (8) bereitgestellt wird, welcher zumindest abschnittsweise eine die Oberfläche bildende Verbundschicht (11) aufweist, welche mit einer Vielzahl von hakenförmigen Ankerelementen (12) ausgebildet ist, wobei die Verbundschicht (11) eine Dicke von weniger als 100 µm aufweist und ist und wobei anschließend der Einsatz (8) zur Ausbildung des Elastomerkörpers (1) mit einem schmelzflüssigen Elastomer umgossen wird.

14. Verfahren zur Herstellung nach Anspruch 13, **dadurch gekennzeichnet, dass** der Einsatz (8) vor der Bereitstellung auf der Oberfläche zumindest teilweise mit einem Ätzverfahren, insbesondere einem nass-chemischen Ätzverfahren, behandelt wird, wobei sich im Zuge der Behandlung die Verbundschicht (11) mit einer Vielzahl von Ankerelementen (12) ausbildet.
